# EUROPEAN PATENT SPECIFICATION

(11) **EP 2 521 858 B1**
(45) Date of publication and mention of the grant of the patent: **21.05.2014**
(21) Application number: 10805818.1
(22) Date of filing: 30.12.2010
(51) Int. Cl.: F03D 3/06

(54) **VERTICAL AXLE WIND GENERATOR WITH OVERSPEED INHIBITION FLAPS**
WINDGENERATOR MIT EINER VERTIKALEN ACHSE MIT ÜBERDREHZAHLSCHUTZKLAPPEN
GÉNÉRATEUR ÉOLIEN À AXE VERTICAL AVEC VOLETS D'INHIBITION DE SURVITESSE

(30) Priority: 08.01.2010 GR 20100100011
(43) Date of publication of application: 14.11.2012
(73) Proprietor: Nouris, Myron, 552 36 Panorama Thessaloniki (GR)
(72) Inventor: Nouris, Myron, 552 36 Panorama Thessaloniki (GR)
(74) Representative: Tomkinson, Alexandra
(86) International application number: PCT/GR2010/000058
(87) International publication number: WO 2011/083345

(56) References cited:
- WO-A1-2008/053282
- DE-B1- 2 757 266
- JP-A- 2005 083 206
- US-A- 3 918 839
- US-A1- 2004 071 541
- US-A1- 2008 075 595

## Description

The invention referred to is an electrical current producing wind generator with a vertical axle and inhibition overspeed flaps, in case of maximum speed wind blow.

Wind generators are popular and are used by lots of people and constitute one of the green forms of electrical current production. Using these systems, the moving energy of the wind can successfully be turned into rotary motion, and this can produce electrical current (with the proper connection) in areas with high average wind blow.

Wind generators usually use flaps situated in a horizontal axle which rotate when the wind blows. The rotated axle is connected with an electrical current generator. The size and the way of construction varies from manufacturer to manufacturer.

Electrical current wind generators have some disadvantages, such as for example the non-controlled development of high speed rotation in the case of strong winds (high speed winds), of major inactivity at the beginning which produces low performance in low wind speeds. The inactivity of the system is owed mainly to the need for inclined flaps that can afford the pressure through a strong wind.

Another disadvantage of wind generators is that these systems are intended for use in applications and installation out of residential areas since their construction and installation need a special restraining procedure and should not be accessed by possible visitors for safety reasons. These installations perform major values of electric current and it is practically difficult and financially unprofitable producing electric current for domestic autonomic consumption (per wind generator and house). Constructions of this kind have another serious disadvantage. The flaps have a reversion towards the axle of each flap in order to avoid the excessive developing speed, so by this way they reduce the air resistance and eventually the rotation speed of the axle. The reversion mechanism usually is a combination of electronic and mechanic systems. The reliability of these systems is not the demanded one. The flaps receive a different inclination many times and this detuning affects the generator performance.

The present invention refers to an electric current wind generator having a vertical axle and flaps that avoid excessive speed development (see for example US 2004/071541 A).

The present invention aims to cover the needs of a small (domestic) electrical current production having solved all the technical difficulties and disadvantages of the manufacturers so far. The aims that have been achieved are the following: small mass of construction, simple installation, minimised inactivity at the beginning, easy to access, safe maintenance and most of all, having the maximum number of rotations controlled by combining the internal and external flaps.

The special characteristic of this invention is that the wind generator is setted on a steady duct, on an upper place of which there is a thrust bearing. There are three (internal) flaps mounted on the generator under the thrust bearing. These flaps are constructed from stainless sheet metal and are totally the same. They also are setted in 120 degrees corner among them and have the maximum possible accuracy in order to have perfect balancing of the system and not to reduce the performance, because of frictions or vibrations. Three other flaps (external) are fixed on these internal flaps. The external flaps are constructed with aerodynamic cross section, from special plastic durable to sun irradiation and weather conditions. These flaps have special ribs and housings for edge support with a wire rope mounted internally of the flaps to prevent spreading in case of fracture. The internal flaps provide a starting with the least wind speed possible, while the external laps provide high rpm, strain and performance.

According to the invention, the aim is achieved with the air entrance into the internal flaps and the force creation which rotates them. The external flaps (suspension flaps) contribute to an even bigger force growth and increase in rotation speed because of their aerodynamic cross section. At the same time the succeeded speed is even bigger from the one that would be succeeded if these flaps where missing and this happens due to increased area and aerodynamics of the external laps. If the wind speed increases gradually more than is desired, the flaps change place gradually also, so that the incidence angle of the flaps change so that the flaps resist the wind flow keeping the rotation speed steady and avoiding the excessive speed that could be harmful for the electrical power production unit and the wind generator itself. So, finally, the desired performance of the steady power production system is provided.

According to the present invention there is provided a vertical axle wind generator, said vertical axle wind generator including internal flaps that have a set wind incidence angle, and external flaps which have a variable wind incidence angle so that they either increase rotation of the generator or decrease rotation of the generator, thereby keeping generator rpm up to a desired maximum limit without causing any damage to the mechanism or producing more electrical current than is desired, characterised in that each external flap is mounted on one of the internal flaps via a support plate having a joint with said internal flap and the appliance of a pair of springs, one spring mounted between an upper support plate of the external flap and the internal flap and one spring mounted between a lower support plate of the external flap and the internal flap.

The invention is mentioned below through an example and with reference to the attached drawings, in which:
Picture 1 shows a perspective image of the invention with a full development of the wind generator parts.
Picture 2 shows the corresponding ground plan of the invention.
Picture 3 shows a detail of the construction where the spring application holds the inhibition flaps.
Picture 4 shows the half cut section of the generator.

The invention is constituted from a steady vertical base (1) with a circular cross section and restrained with screws in steady ground. The whole construction is rotated on the base. Three internal flaps (2) constitute the main resistance center and air flow. When the air passes through them, a rotating movement is created. The flaps are supported through screws from their edges in circular discs (3 and 13) mounted above and below the steady vertical base (1). The flap mountings at a bottom of the base (1) are performed through a pillow block (5) and its stabilization is performed through a divided chock (6). The special items (7) are supported on the internal flaps by a joint (9) and the inhibition flaps (8) (external flaps) are mounted on their edges. The special items (7) constitute the base for the inhibition flaps are they are mounted with a pin which creates a joint on the internal flaps (2). The inhibition flap bases are connected between them with special metal plates (10) in order to take the same inclination angle according to the direction of the wind, since they are moving together, one after the other. This can be achieved because the special metal plates (10) are mounted to the edges of the flaps with opposite joints (4) which are setted to the special items (7). Their shape has a similar obtuse angle and in combination with their position, they declare the margin of the place changing of the inhibition flaps which is the incidence corner of the air on them. There is a pin (14) on the metal plate supports (7) of the external flaps facing the center of the construction parallel to the rotation axle. A spring (15) is suspended on this pin and the other edge is on pin (12) which is nailed on the internal surface of the opposite internal flap. This joint (9) allows to the inhibition flaps to have the ability to change position, in combination with the special metal plates (10) and the spring (15) and during maximum wind speed to take the default position from construction which keeps rpm of the generator steady. The final position of the flaps appears because of the big centrifugal force developing in the inhibition flaps. This position overcomes the prestress of the spring (15) so the incidence angle of the wind to the inhibition flaps changes. As a conclusion, the final rpm of the flaps and of the generator stabilises and the already existing springs return the flaps to their initial position, the one when air speed is inside the desired limits. The spring tension is adjusted to resist inside the desired air speed limits- rpm and can be readjusted in case the manufacturer desires more or less final rpm.

The inhibition flaps are designed with a special aerodynamic cross section and they have a wire rope (16) in their internal for safety reasons, which prevents the item spreading in case of fracture. The specific wire rope ends to a special item (17) which provides the desired stretch.

The application of the generator (18) on the construction is performed through a common generator embedment to the eccentricities of the construction. Contrary to the regular operation of motors and generators, we have through operation steady winding of the coils (19) and of the ferromagnetic core (20) and rotation of the skin which carries to the internal permanent magnets (21).

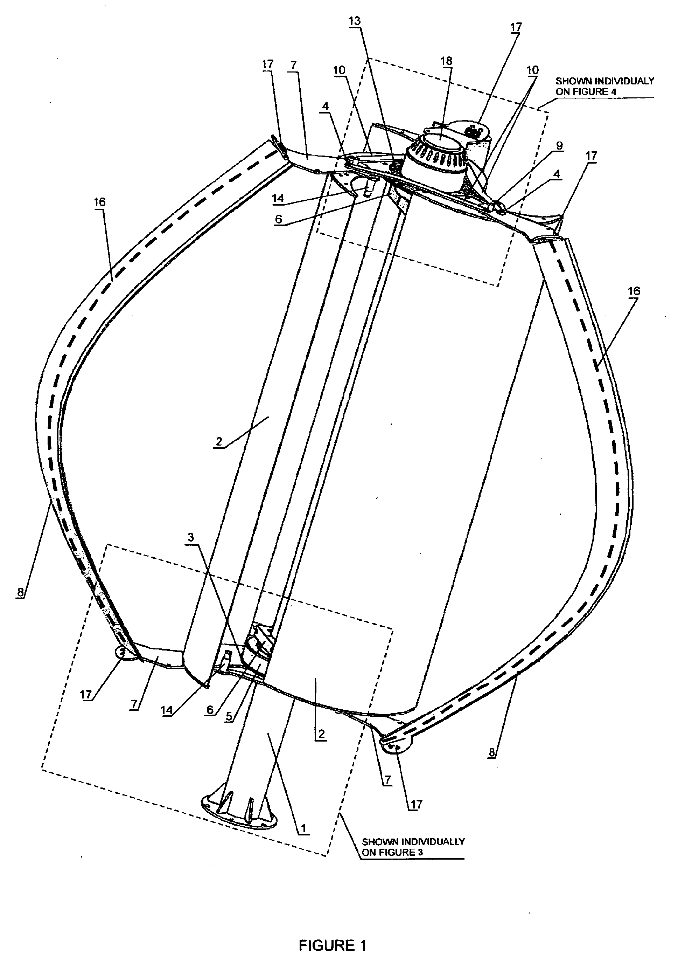

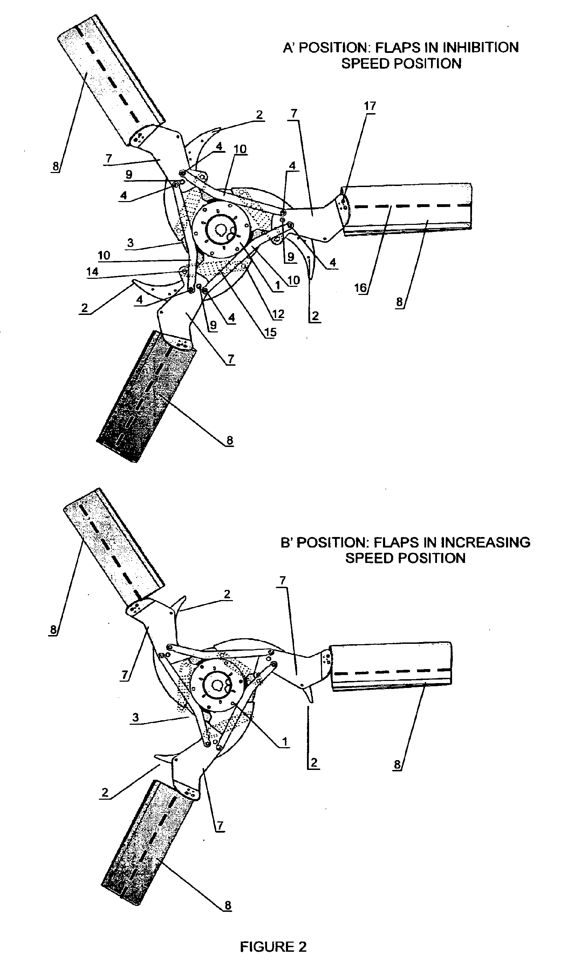

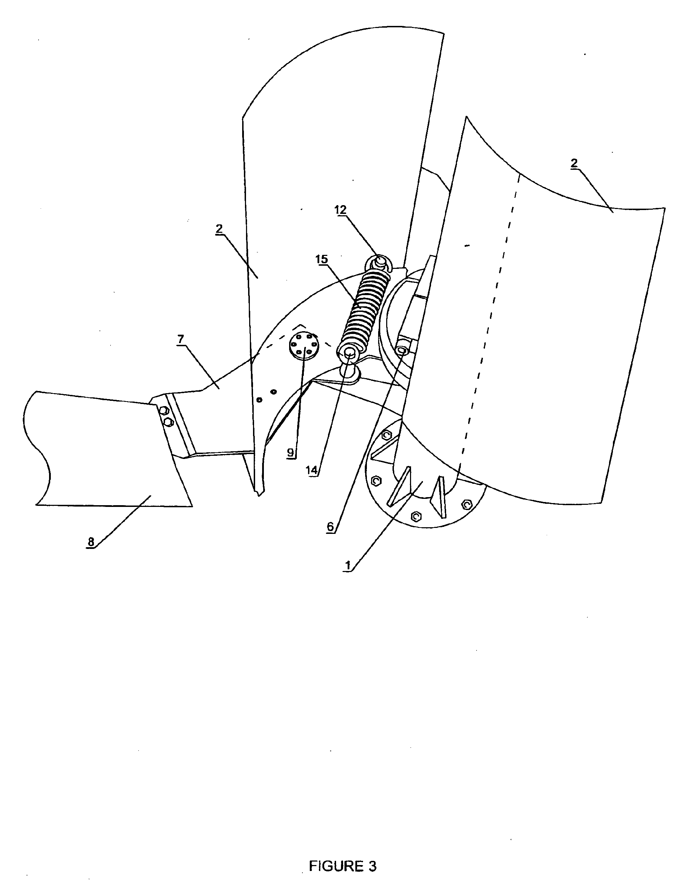

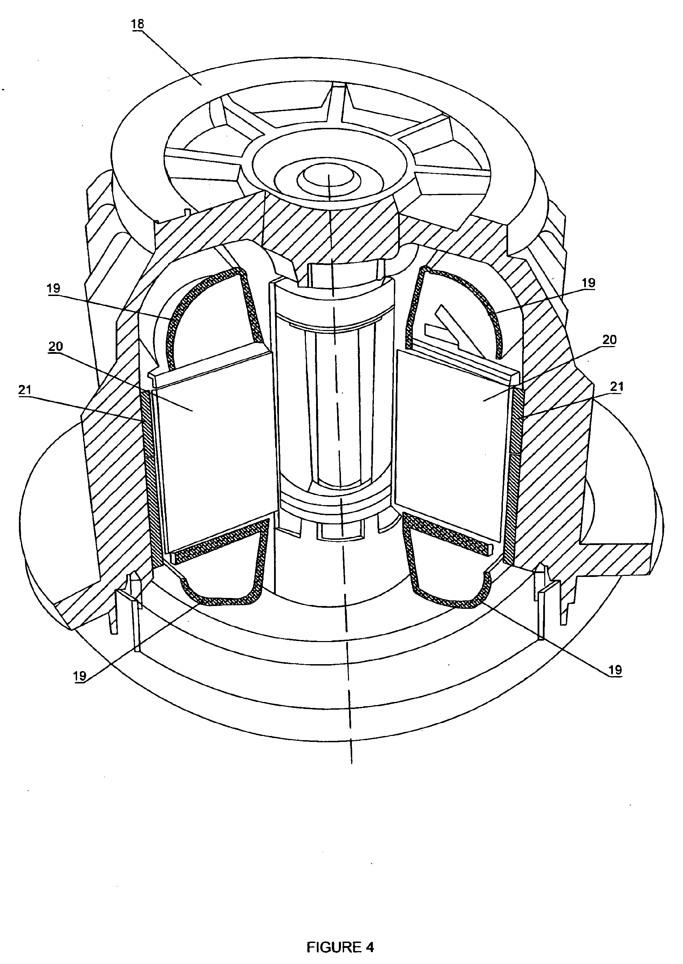

## Claims

1. A vertical axle wind generator, said vertical axle wind generator including internal flaps (2) that have a set wind incidence angle, and external flaps (8) which have a variable wind incidence angle so that they either increase rotation of the generator or decrease rotation of the generator, thereby keeping generator rpm up to a desired maximum limit without causing any damage to the mechanism or producing more electrical current than is desired, **characterised in that** each external flap (8) is mounted on one of the internal flaps (2) via a support plate (7) having a joint (9) with said internal flap (2) and the appliance of a pair of springs (15), one spring (15) mounted between an upper support plate (7) of the external flap (8) and the internal flap (2) and one spring (15) mounted between a lower support plate (7) of the external flap (8) and the internal flap (2).

2. The vertical axle wind generator of claim 1 **characterised in that** each spring (15) is suspended between two pins (12, 14), one pin (12) mounted on the internal flap (2) and one pin (14) mounted on the support plate (7).

3. The vertical axle wind generator of claim 1 **characterised in that** each external flap (8) is connected to an adjacent external flap via a special metal plate (10).

4. The vertical axle wind generator of claim 3 **characterised in that** opposite edges of the special metal plates (10) that are joined to each external flap (8) via a joint (4) are at an obtuse angle.

5. The vertical axle wind generator of claim 1 **characterised in that** the internal flaps (2) are mounted at an upper point to an electrical current generator (18) and at a lower point to a pillow block (5).

6. The vertical axle wind generator of claim 1 **characterised in that** the generator can be constructed using three, four or five internal flaps, with a corresponding number of external flaps.

## Patentansprüche

1. Vertikalachsen-Windkraftanlage, wobei die genannte Vertikalachsen-Windkraftanlage innere Flügel (2) aufweist, die einen festen Windanströmwinkel haben, und äußere Flügel (8), die einen variablen Windanströmwinkel haben, so dass sie die Drehung der Kraftanlage steigern oder die Drehung der Kraftanlage verringern, wodurch die Kraftanlagendrehzahl auf einer gewünschten Obergrenze gehalten wird, ohne am Mechanismus Schäden zu verursachen oder mehr elektrischen Strom als erwünscht zu erzeugen, **dadurch gekennzeichnet, dass** jeder äußere Flügel (8) über eine Trägerplatte (7) an einem der inneren Flügel (2) montiert ist, die eine Verbindung (9) mit dem genannten inneren Flügel (2) hat, und ein Federpaar (15) anwendet wird, wobei eine Feder (15) zwischen einer oberen Trägerplatte (7) des äußeren Flügels (8) und dem inneren Flügel (2) montiert ist und eine Feder (15) zwischen einer unteren Trägerplatte (7) des äußeren Flügels (8) und dem inneren Flügel (2) montiert ist.

2. Vertikalachsen-Windkraftanlage nach Anspruch 1, **dadurch gekennzeichnet, dass** jede Feder (15) zwischen zwei Zapfen (12, 14) eingehängt ist, wobei ein Zapfen (12) am inneren Flügel (2) montiert ist und ein Zapfen (14) an der Trägerplatte (7) montiert ist.

3. Vertikalachsen-Windkraftanlage nach Anspruch 1, **dadurch gekennzeichnet, dass** jeder externe Flügel (8) über ein spezielles Blech (10) mit einem benachbarten äußeren Flügel verbunden ist.

4. Vertikalachsen-Windkraftanlage nach Anspruch 3, **dadurch gekennzeichnet, dass** einander entgegengesetzte Ränder der speziellen Bleche (10), die über eine Verbindung (4) an jeden äußeren Flügel (8) angefügt sind, im stumpfen Winkel zueinander sind.

5. Vertikalachsen-Windkraftanlage nach Anspruch 1, **dadurch gekennzeichnet, dass** die inneren Flügel (2) an einem oberen Punkt an einem elektrischen Stromerzeuger (18) und an einem unteren Punkt an einem Polsterblock (5) montiert sind.

6. Vertikalachsen-Windkraftanlage nach Anspruch 1, **dadurch gekennzeichnet, dass** die Windkraftanlage mit drei, vier oder fünf inneren Flügeln mit einer entsprechenden Anzahl von äußeren Flügeln konstruiert sein kann.

## Revendications

1. Générateur éolien à axe vertical, ledit générateur éolien à axe vertical incluant des volets internes (2) qui ont un angle d'incidence de vent défini, et des volets externes (8) qui ont un angle d'incidence de vent variable de sorte à ce qu'ils soit augmentent la rotation du générateur, soit diminuent la rotation du générateur, ce permet par conséquent de maintenir les tr/mn du générateur à une limite maximale désirée sans causer de dommages au mécanisme ou produire davantage de courant électrique que l'on désire, **caractérisé en ce que** chaque volet externe (8) est monté sur l'un des volets internes (2) par l'intermédiaire d'une plaque de support (7) munie d'un raccord (9) avec ledit volet interne (2) et l'application d'une paire de ressorts (15), un ressort (15) étant monté entre une plaque de support supérieure (7) du volet externe (8) et du volet interne (2), et un ressort (15) étant monté entre une plaque de support inférieure (7) du volet externe (8)) et du volet interne (2).

2. Générateur éolien à axe vertical selon la revendication 1, **caractérisé en ce que** chaque ressort (15) est suspendu entre deux broches (12, 14), une broche (12) étant montée sur le volet interne (2) et une broche (14) étant montée sur la plaque de support (7).

3. Générateur éolien à axe vertical selon la revendication 1, **caractérisé en ce que** chaque volet externe (8) est raccordé à un volet externe adjacent par l'intermédiaire d'une plaque métallique spéciale (10).

4. Générateur éolien à axe vertical selon la revendication 3, **caractérisé en ce que** des bords opposés des plaques métalliques spéciales (10), qui sont réunies à chaque volet externe (8) par l'intermédiaire d'un raccord (4), se situent à un angle obtus.

5. Générateur éolien à axe vertical selon la revendication 1, **caractérisé en ce que** les volets internes (2) sont montés au niveau d'un point supérieur sur un générateur de courant électrique (18), et au niveau d'un point inférieur sur un palier à semelle (5).

6. Générateur éolien à axe vertical selon la revendication 1, **caractérisé en ce que** le générateur peut être construit grâce à l'utilisation de trois, quatre ou cinq volets internes, avec un nombre correspondant de volets externes.
